(19) Europäisches Patentamt / European Patent Office / Office européen des brevets

(11) **EP 3 825 725 A1**

(12) **EUROPEAN PATENT APPLICATION**

(43) Date of publication:
26.05.2021 Bulletin 2021/21

(51) Int Cl.:
*G01S 7/497* (2006.01)          *G01S 7/481* (2006.01)
*G01S 17/931* (2020.01)

(21) Application number: **19210666.4**

(22) Date of filing: **21.11.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **Robert Bosch GmbH
70442 Stuttgart (DE)**

(72) Inventors:
• **ALBUQUERQUE, Andre
3550-165 Penalva do Castelo (PT)**

• **MARQUES, Isabel
3800-909 Aveiro (PT)**
• **CALDELAS, Pedro
4715-319 Braga (PT)**
• **ANDRE, Ricardo
4715-278 Braga (PT)**
• **ARAUJO, Teresa
4715-339 Fraião, Braga (PT)**
• **PEREIRA, Dionisio
4430-818 Avintes (PT)**

(54) **DISTANCE TESTING ARRANGEMENT FOR A LIDAR SYSTEM, LIDAR SYSTEM ARRANGEMENT, AND APPARATUS**

(57) The present invention concerns a distance testing arrangement (100) for a LiDAR system (2), wherein the LiDAR system (2) comprises a sender unit (3) configured to generate and emit primary light (57) to a field of view (50) and a receiver unit (4) configured to receive secondary light (58) from the field of view (50) and wherein the distance testing arrangement (100) is configured (i) to receive and couple in primary light (57) emitted by the sender unit (3), (ii) to subject the primary light (57) to propagation through a compactified, wound up and/or folded light propagation path (15') having (i) a predetermined propagation length (L1, L2, L3, L4) thereby forming propagated light (57') and (ii) in particular a reduced construction volume, and (iii) to couple out and send said propagated light (57') to the receiver unit (4).

**Fig. 5**

EP 3 825 725 A1

**Description**

State of the Art

The present invention concerns a distance testing arrangement for a LiDAR system, a LiDAR system arrangement as such, and an apparatus which is equipped with a LiDAR system arrangement.

In order to monitor the periphery or environment of a working or operating apparatus and in particular of vehicles, nowadays so-called LiDAR systems (LiDAR: light detection and ranging) are employed. Such LiDAR systems are configured in order to generate and impinge light or infrared radiation to a desired field of view and to receive and analyze radiation reflected from the field of view in order to detect objects of a scene in the field of view, in particular in order to organize and rule the underlying apparatuses' operation.

In order to improve the operation quality of such LiDAR systems it is required to monitor and/or adjust the LiDAR systems' range determination capabilities. Prior art approaches in general use real world testing scenes having certain objects at predetermined distances which are used for checking and calibrating the range detection process of the underlying LiDAR system. This common approach requires a high effort in view of workload, the involved equipment for designing the testing environment, and the required construction/configuration volume/area.

Disclosure of the invention

The distance testing arrangement according to the present invention has the advantage of enabling testing and calibrating of a LiDAR systems' distance detection capabilities without the necessity of designing real world testing scenes or the like. This is achieved by providing a distance testing arrangement for a LiDAR system, (I) wherein the LiDAR system comprises a sender unit configured to generate and emit primary light to a field of view and a receiver unit configured to receive secondary light from the field of view and (II) wherein the distance testing arrangement is configured (a) to receive and couple in primary light emitted by the sender unit, (b) to subject the primary light to propagation through a compactified, wound up and/or folded light propagation path having (i) a predetermined propagation length thereby forming propagated light and (ii) in particular a reduced construction volume, and (c) to couple out and send said propagated light to the receiver unit.

The dependent claims contain advantageous embodiments of the present invention.

According to a preferred embodiment of the present invention, the proposed distance testing arrangement comprises or is formed as a beam propagation unit or BPU.

The invention's distance testing arrangement may alternatively or additionally comprise at least one of (i) a light propagation module or LPU, (ii) a light collection module, (iii) a light sending module, wherein the light propagation module is optically coupled between the light collection module and the light sending module of the testing arrangement.

    (i) The light propagation module preferably offers said compactified or compact, wound up and/or folded physical/optical light propagation path, in particular of a given certain, predefined and/or fixed propagation or traveling length.

    (ii) The light collection module is preferably configured in order to receive from said sender unit and coupling in said primary light and/or further preferably comprises at the sender unit's side a window, followed by a lens, an optical waveguide or fiber and a connector or fiber connector towards the light propagation module's side.

    (iii) Further additionally or alternatively, the light sending module is preferably designed for the coupling out and sending to said receiver unit said propagated or traveled light and/or preferably comprises at the receiver unit's side a window, followed by a lens, an optical waveguide or fiber and a connector or fiber connector at the light propagation module's side.

Said compactified or compact, wound up and/or folded light propagation path may preferably be formed as or may comprise an arrangement of one or plural optical waveguides, optical fibers, multiply reflecting mirror arrangements, plane-parallel plates and/or Fabry-Perot interferometric arrangements. These measures may be combined with each other. In addition, these measures may be used in order to offer the respective real physical and/or optical light propagation or traveling path for the received primary light in order to "simulate" or "emulate" in a spatially condensed, compactified or compact manner propagation or traveling of the lights comparable to propagation or traveling as in free space in a real environment of the field of view comprising a certain scene.

A comparable simple arrangement for the testing process can be offered according to a preferred and advantageous embodiment if said compactified light propagation path is formed as one or a plurality of coiled or wound up optical fibers, wherein each optical fiber offers a light propagation path having a predetermined length.

Although it is possible to present the testing arrangement with a single length propagation path only, it is of particular advantage if the same apparatus is capable of presenting different artificial propagation paths to the primary light in order to ensure testing situations with different distances.

Therefore, switching means may advantageously be provided for controllably switching between distinct ones of an underlying plurality of said compactified or compact light propagation paths, in particular formed by a corresponding plurality of wound up optical fibers.

In this regard, said switching means may be or may comprise one or plural optical light switches, optical beam splitters and/or beam combiner, which in particular may be controllable by an underlying control unit configured to rule the testing process.

It is of particular advantage if the proposed distance testing arrangement is used in a direct optical coupling to the LiDAR system to be tested, namely with the primary illumination light generated and emitted by the LiDAR systems' sending module being directly optically coupled to the BPU's light collection module and with the travelled or propagated light provided by the BPU's light sending module being directly optically coupled to the LiDAR systems' receiving module.

However, in cases that such a direct coupling is not desired or cannot completely be achieved, it is of particular advantage if according to a further preferred embodiment of the invention the distance testing arrangement is provided with range finding means or with a connection to range finding means, wherein the range finding means is configured in order to determine a distance between the light collection module and the sender unit of the underlying LiDAR system and/or a distance between the light sending module and the receiver unit of the underlying LiDAR system, thereby in particular enabling consideration of the additional traveling lengths required for the transition between the LiDAR system as such and the testing apparatus or arrangement.

The distance testing arrangement according to the present invention may be formed as a test kit and/or as a retrofit package and such that it can be mounted to a LiDAR system to be tested in a detachable manner.

The present invention further concerns LiDAR system arrangement as such which comprises on the one hand a LiDAR system and on the other hand an embodiment of the distance testing arrangement according to the present invention.

The LiDAR system may have a sender unit which is configured in order to generate and emit primary light to a field of view and a receiver unit which is configured in order to receive secondary light from the field of view.

Said distance testing arrangement is formed according to the present invention's key aspects and is optically coupled or capable of being optically coupled to the sender unit and the receiver unit of the underlying LiDAR system.

Eventually, the present invention also provides an apparatus - considered as an operating or working entity - comprising an operation unit and a LiDAR system arrangement according to the present invention and configured to monitor and/or control operation of the operation unit, wherein the apparatus may in particular be formed as a vehicle.

Brief description of the drawings

In the following section embodiments of the present invention are disclosed with reference to the enclosed figures.

Figure 1              is a schematic block diagram illustrating general aspects of LiDAR systems.

Figures 2A and 2B     are schematic block diagrams describing an embodiment of a LiDAR system arrangement according to the present invention with the invention's distance testing arrangement being detached and attached, respectively, to the underlying LiDAR system.

Figures 3 and 4       are schematic block diagrams describing embodiments of the invention's distance testing arrangement with and without a range finding means, respectively.

Figure 5              demonstrates by means of a schematic block diagram general aspects of the invention's distance testing arrangement using a coiled optical fiber for defining and providing a compactified light propagation path.

Figures 6 and 7       elucidate by means of schematic block diagrams embodiments of the invention's distance testing arrangement providing plural compactified light propagation paths by using coiled optical fibers of different lengths.

Embodiments of the present invention

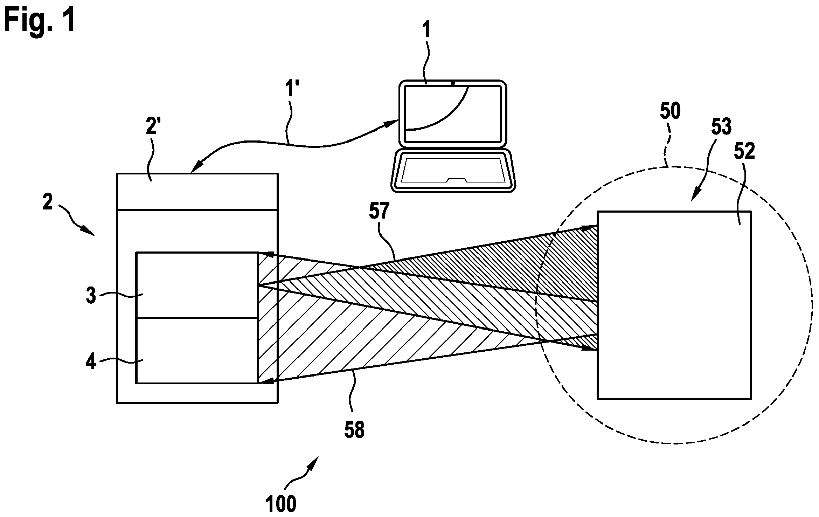

In the following, embodiments and the technical background of the present invention are described in detail by taking reference to accompanying figures 1 to 7. Identical or equivalent elements and elements which act identically or equivalently are denoted with the same reference signs. Not in each case of their occurrence a detailed description of the elements and components is repeated.

The depicted and described features and further properties of the invention's embodiments can arbitrarily be isolated and recombined without leaving the gist of the present invention.

Figure 1 is a schematic block diagram illustrating general aspects of a LiDAR system 2 which may be used in connection with the present invention's distance testing arrangement 5.

A typical LiDAR system 2 is a part of a LiDAR system arrangement 100 comprises (i) a sender unit 3 which is configured in order to generate and emit primary light 57 to a field of view 50 and (ii) a receiver unit 4 which is configured in order to receive secondary light 58 from the field of view 50.

The received secondary light 58 inter alia comprises radiation stemming from the primary light 57 reflected in the scene 53 of the field of view 50 comprising one or plural objects 52 to be detected.

Within the receiver unit 4 the received secondary light 58 is detected by means of some kind of detector unit not shown in the figure. The detector unit is configured in order to generate corresponding electrical signals which may be evaluated within an internal control unit 2' and/or an external control unit 1 connected by means of an acquisition and/or control line 1'. Based on the evaluation of the secondary light 58 some kind of information may be provided and/or control signals used for controlling some kind of apparatus may be generated and provided, too.

The present invention attempts providing means for more reliably testing range detection capabilities of such LiDAR systems 2.

In particular, the present invention and the involved LiDAR systems 2 may be applied to the field of autonomous driving and, more specifically, to the measurement of the range accuracy of such sensors.

Therefore, the present invention inter alia suggests the use of a compact fiber-based system with well-defined and calibrated effective length of an artificial optical path that recreates the propagation of the LiDAR primary light beam 57 through more or less long distances in order to verify the range accuracy of the LiDAR systems' underlying sensor without requiring very long measuring areas in the sense of a construction volume.

In general, LiDAR systems 2 provide sensors that use light to create a map of a surrounding scenario or field of view 50 with high precision and detail by combining the acquisition of two-dimensional images with depth information. This ability is highly desirable for autonomous driving as it allows to perceive the position and movement of different surrounding objects 52 (vehicles, pedestrians obstacles, walls, etc.) in a scene 53 of the field of view 50, thus providing critical information to an internal and/or external control and/or central processing unit 2' and 1, respectively, of the underlying apparatus or vehicle, e.g. in order to take decisions and operating or driving actions.

Given the importance of correctly perceiving the surrounding scenario for autonomous driving, it is extremely important that the data given by LiDAR systems 2 or sensors is reliable, exact, and precise. Otherwise, LiDAR systems 2 or sensors may feed incorrect information to the processing unit of the apparatus or car and ultimately cause driving accidents. Hence, being able to determine the accuracy of range data given by these sensors is critical.

In order to determine how accurate and reliable the range measurements of a LiDAR system 2 or sensor are, a target is typically placed at a well-known distance to the LiDAR camera and several range measurements are acquired, as shown, for instance, in Pierrottet, D., et al. "Characterization of 3-D imaging LiDAR for hazard avoidance and autonomous landing on the Moon." Laser Radar Technology and Applications XII. Vol. 6550. International Society for Optics and Photonics, 2007. With an appropriate statistical analysis of the obtained data it is then possible to infer on the closeness of agreement between test results, i.e., the precision, and the closeness between a test result and the real distance value, i.e., the trueness.

One of the main disadvantages of the common or prior art procedure described above is the need for very long measurement areas, especially when measuring the trueness and precision at long range values. This is a very important drawback for measuring the aforementioned quantities not only while producing the LiDAR systems 2 and sensors in a production line, but also in automotive workshops and inspection centers.

According to one aspect of the present invention, it is proposed to measure the trueness and precision of range measurements by means of a distance testing arrangement or device offering a real and physical light propagation path in a compact or compactified manner and device having a comparable low construction volume.

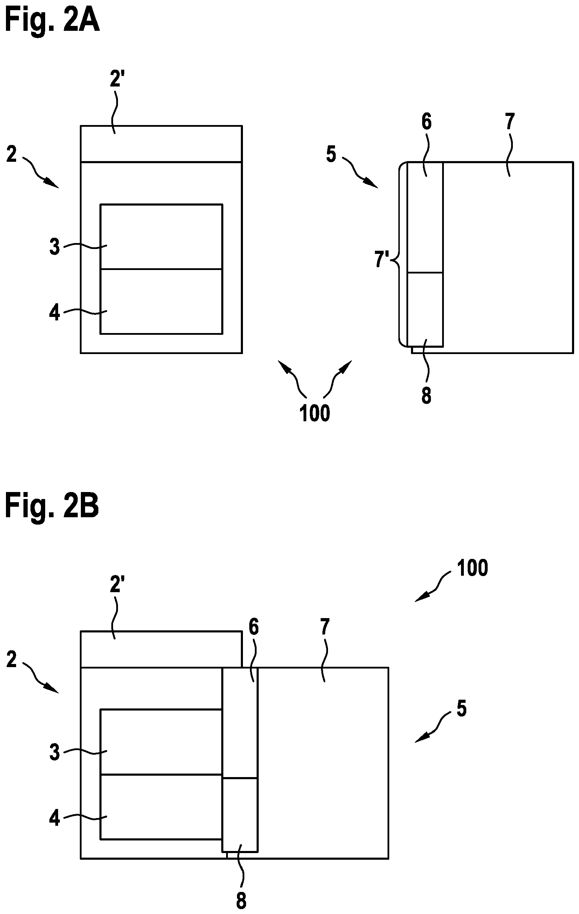

This general principle is further elucidated schematically in connection with figures 2 to 4.

In this regard, figures 2A and 2B are schematic block diagrams describing an embodiment of a LiDAR system arrangement 100 according to the present invention with the invention's distance testing arrangement 2 being detached as shown in figure 2A and attached as shown in figure 2B, namely regarding the underlying LiDAR system 2.

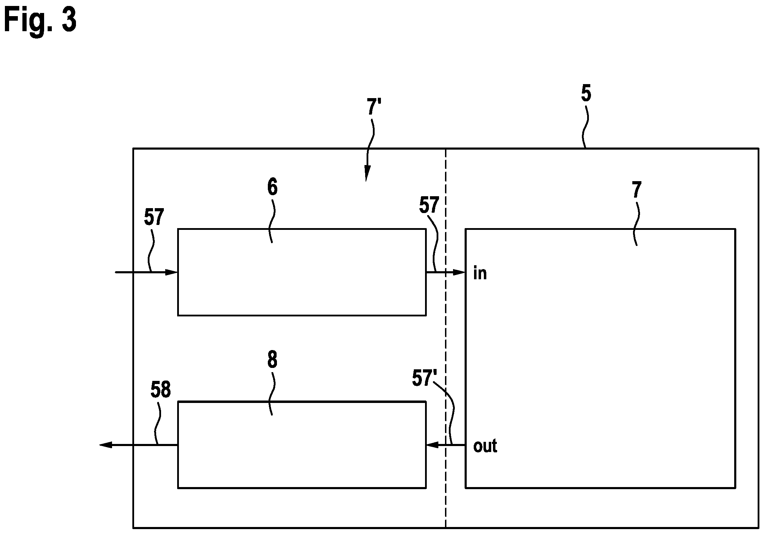

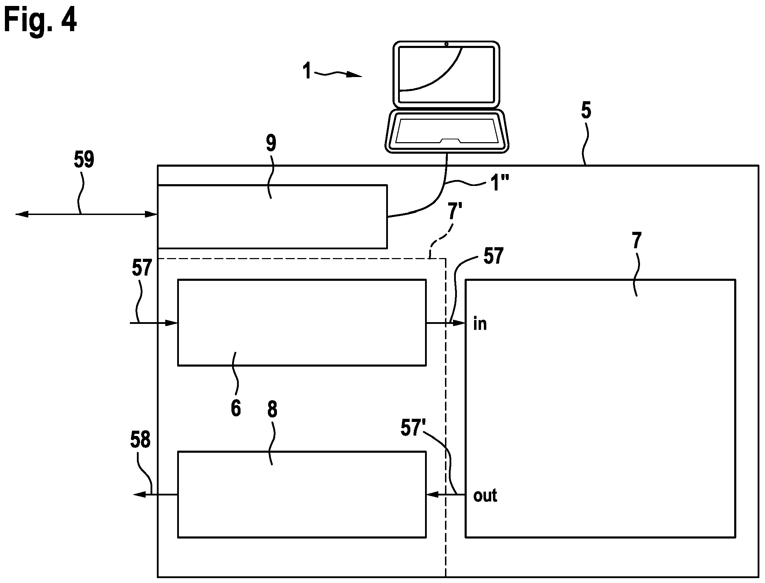

Figures 3 and 4 are schematic block diagrams describing embodiments of the invention's distance testing arrangement 5 with and without, respectively, a range finding means 9.

In general, the present invention's distance testing arrangement 5 may be regarded as a beam propagation unit or BPU and may be regarded as being formed (i) by a light propagation module 7 or LPU on the one hand which is configured to provide and offer a compact or compactified light propagation path 15' as a physical entity as well as (ii) by an optical interface 7' comprising a light collection module 6 and the light sending module 8. The light collection module 6 is configured in order to receive and couple in primary illumination light 57 generated and admitted by the underlying leaders system's 2 send our sending unit or module 3.

The light propagation module 7 or LPU having the physical and compact or compactified light propagation path 15' is configured to let the received primary illumination light 57 physically propagate and/or travel through the means providing the light propagation path 15', for instance through an optical fiber 15 of a predetermined and fixed length L1 to L4. By means of the propagation process the primary illumination light 57 is formed into propagated light 57'.

Eventually, the light sending module 8 is configured in order to couple out and send the propagated or traveled light 57' from the BPU 5 back to the underlying LiDAR system 2 and in particular its receiver or receiving unit or module 4.

According to particular embodiments of the present invention and of the proposed distance testing arrangement and/or device 5, the invention's key aspects are therefore based on physically propagating emitted primary light 57 through a predetermined and inter alia very large distance, however by using a compactified or a compact physical optical path 15' for propagating and traveling the received primary illumination light 57, e.g. in an optical fiber 15 or in a general means having a propagation path 15' which is compactified, wound up and/or folded by any other physical means.

Since optical fibers 15 can be spooled to build very compact light propagation modules 7, this approach can reduce the required measuring area to a large extent, as well as allow for quality inspection in a production line.

The present invention inter alia attempts solving one or plural of the problems mentioned in the following:

- Test method to measure the range trueness and precision of LiDAR systems 2 or sensors in different scenarios such as quality control and calibration in a production line, automobile inspection centers, workshops and repair shops.

- Current methods rely on having a target at well-defined distances with respect to the LiDAR system 2 or sensor, which requires long testing areas. Therefore, such methods are unviable for testing in a production line, or to implement in common automobile workshops.

- Measurements of the range trueness and precision for different range values requiring moving either the target or the sensor to different positions, or having several targets at the different range positions.

- Changing the target or the sensor to different positions requires the intervention of a human operator each time the distance to the target needs to be changed. Alternatively, the distance between the target and sensor can be changed automatically by using a rail system, but such systems are complex and very expensive.

- The trueness and reliability of the range precision and trueness measurements depends on how well-defined and stable is the distance between the target and the sensor. This may be difficult to achieve in practice, especially when the distance between the target and the sensor has to be changed to evaluate the trueness and precision for different range values.

- When evaluating the range precision and trueness for long distances (>100m), the required targets are usually large.

According to the present invention one or plural of the following advantages and benefits may be obtained:

- Possibility to measure the range accuracy, trueness and precision for range values up to hundreds of meters in a small testing area.

- Very compact and passive solution. Several hundreds of meters of optical fiber can be spooled in fiber reels with only a few centimeters in size.

- No targets are required. The LiDAR system 2 measures the time an optical pulse propagates through an optical fiber 15 or any other physical means with well-defined length.

- Compatible with different types of time-of-flight LiDAR systems 2, including scanning and flash LiDARs.

- Evaluation of precision and trueness at different range values simply by switching two fiber connectors, without the need to change the distance between the sensor 2 and fiber unit in the sense of the inventions distance testing arrangement 5 and its light propagation unit 7.

- Higher reliability on the trueness and precision measurements by using fibers 15 with well-defined and calibrated length.

- Possibility to measure the precision and trueness for different range values at once using fiber optic beam splitters 22, 23 or multicore fibers with fan-out adapters to multiple single core fibers with different lengths.

- Possibility to measure the trueness and precision for different field of view angles by placing the fiber system in a circle goniometer.

- The influence of the light wavelength on the measurements is small and can be corrected by software.

- Possibility to include a range finding module to accurately determine the distance between the fiber system and the LiDAR system 2 or sensor which automatically accounts for any variations of this parameter in real-world, non-ideal measuring conditions.

- The fiber coupling optics can be designed to provide general solution that works for a wide variety of LiDAR systems 2 or sensors and thus reducing the cost of the equipment, albeit with low light coupling efficiency (considerable losses). Alternatively, the coupling optics can also be designed for a specific LiDAR model that can be interchanged when measuring different sensors.

A schematic representation of the proposed range accuracy measuring system is shown in Figures 2A and 2B.

The proposed invention may comprise a central processing unit or CPU 1 as an external control unit 1 connected to the LiDAR sensor 2 or any other control means, e.g. an internal control unit 2'. The CPU 1 or the general control means 2' may be responsible for reading range data generated by the LiDAR system and compute the precision and trueness from a set of several data measurements. Herein, the definition of accuracy, trueness and precision as e.g. specified in ISO 5725 may be adopted. According to ISO 5725-1, accuracy is a term that refers to the closeness between a test result and the accepted reference value. When performing a set of several measurements, the terms trueness and precision usually apply to describe accuracy. Again, according to ISO 5725, trueness refers to the closeness of agreement between the arithmetic mean of a large number of test results and the true or accepted reference value. On the other hand, precision refers to the closeness of agreement between test results and is closely related to the ability to replicate a given result for identical test measurements.

As already indicated above, a LiDAR system 2 or sensor typically comprises a sending module 3 that is responsible for emitting the light beams of primary light 57 towards a specific target or object 52 within a certain field of view 50 embracing a scene 53, and a receiving module 4, whose main function is to receive, collect and focus the reflected/backscattered light as secondary light 58 onto a photo detection unit 20. Such modules may include a wide range of optical, optoelectronic and electronic components such as lasers, photodetectors, lenses, filters, mirrors, prisms, and PCBs.

In addition to the CPU 1 or other control means 2' and the LiDAR system 2 or sensor and in accordance to the present invention, the range accuracy system in the sense of the inventions distance testing arrangement 5 also includes a beam propagation unit or BPU 5 which may be located at a distance Lc to the LiDAR system 2 or sensor. The BPU 5 is responsible for the propagation of the primary light 57 along a reference distance L1 to L4 offered by a physical compact or compactified optical light propagation path 15' and is a core feature of the present invention.

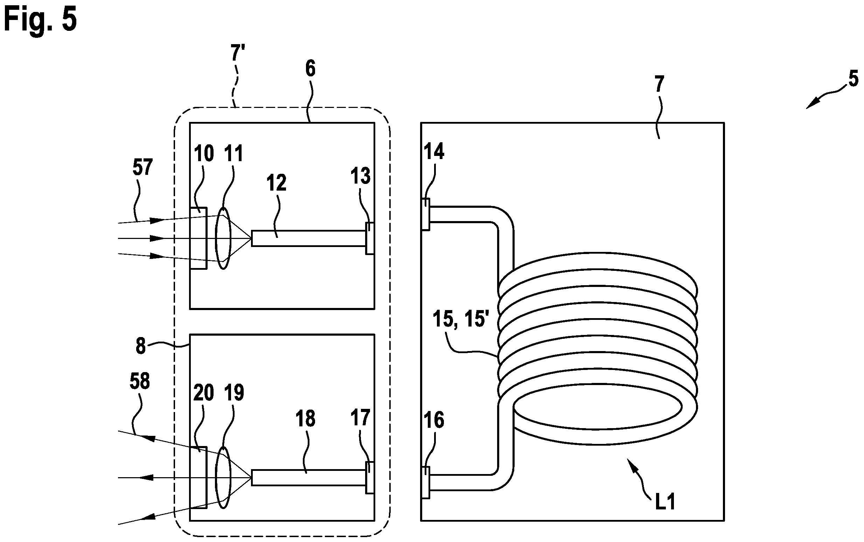

Figure 5 demonstrates by means of a schematic block diagram general aspects of the invention's distance testing arrangement 5, which in this case uses coiled optical fiber 15 for defining and providing a compactified a compact real physical light propagation path 15'.

The general description of a possible BPU 5 as shown in figure 5 inter alia relies on the provision of a light collection module 6 that is responsible for collecting and coupling light emitted from LiDAR sensor 2 into an optical fiber. The coupled light is then led to the light propagation module 7, wherein the light propagates or travels through an offered real physical and in particular compact or compactified optical light travelling path 15', e.g. formed by a span of one or plural optical fibers with predetermined and well-known and calibrated length L1 to L4.

After the traveling or propagation throughout the light propagation module 7, the thereby formed travel to a propagated light beam 57' is led to the provided light sending module 8 that is responsible for coupling light from the artificial optical path 15' and its fiber 15 into the receiving module or unit 4 of the underlying LiDAR system 2 or sensor.

In a preferred embodiment of the invention - as e.g. shown in figure 4, the BPU 5 also includes a rangefinder module 9 with an external connection 1" to external control unit 1 or CPU 1 or the respective general control means 2', whose main goal is to precisely measure the distance between Lc the LiDAR system 2 or sensor and the BPU 5, and therefore to account for said distance Lc.

The light collection module 6 is described in more detail in figure 5.

The light collection module 6 is a part of the interface 7' includes a window 10 that acts as an entrance aperture to the system 5 and thus must be transparent to the primary light 57 emitted by LiDAR systems 2 or sensors. After the light 57 has entered the module 6 through window 10, lens 11 is used to couple said light 57 entering into the module 6 to an intermediate optical fiber 12, which then goes into the light propagation module 7 via connectors 13 and 14. In addition to the input fiber connector 14, the light propagation module 7 includes an optical fiber 15 with a predefined length, L1 in the example shown in figure 5, and an output fiber connector 16, through which the light propagation module connects to the light sending module 8 via fiber connector 17. The light sending module 8 includes an optical fiber 18, a fiber decoupling lens 19, and an exit window 20.

According to an alternative embodiment of the present invention, the light sending module 8 may also include an optical isolator or an equivalent system that is configured in order to avoid light 57 emitted by the LiDAR system 2 or sensor to enter the BPU 5 through the light sending module 8.

The modular system for the inventions distance testing arrangement 5 described above is a preferred embodiment of the invention, as it allows a more flexible solution where either the light collection, propagation or sending modules can easily be replaced and/or exchanged with different models that best fit the LiDAR system 2 or sensor under test. Different embodiments of the invention include the possibility to have generic, non-replaceable and fixed light collection and sending optics to measure the trueness and precision for a wide range of different sensors, albeit at the expense of light coupling efficiency between the sensor and the BPU.

In one embodiment of the invention, multimodal fibers 15 with large core areas are used in the BPU 5 as they allow easier light in- and out-coupling of light into and from the fiber. However, depending on the length of fiber 15 and its intermodal dispersion, the same optical pulse propagating in different modes can have significantly different group velocity and arrive at different times at the receiving module of the LiDAR system 2 or sensor, which leads to uncertainty on the time-of-flight and range measurements. In such cases, single-mode fibers 15 with much lower group velocity dispersion are preferable.

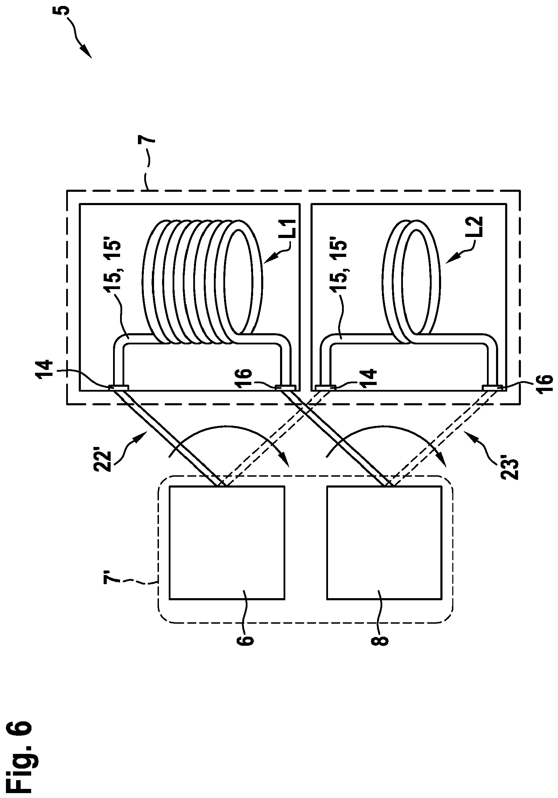

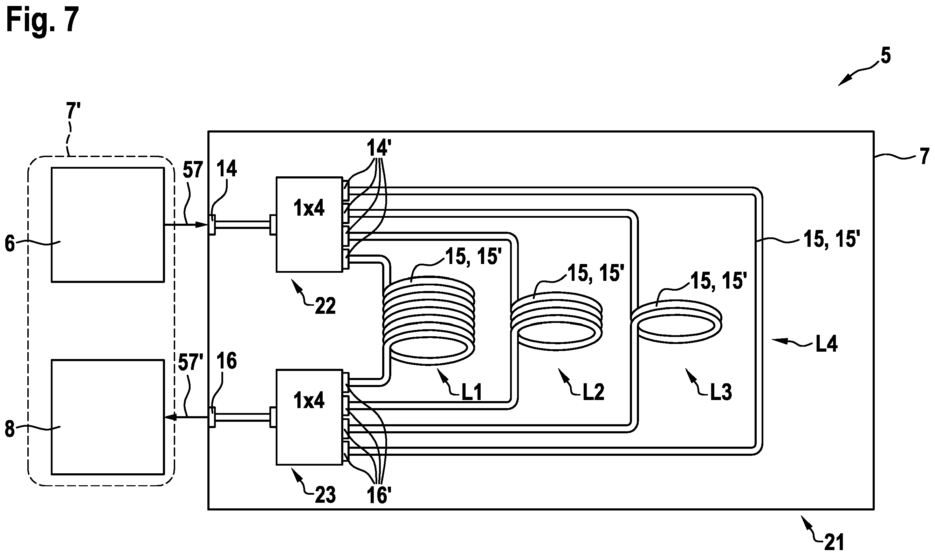

Figures 6 and 7 elucidate by means of schematic block diagrams embodiments of the invention's distance testing arrangement 5 providing plural compactified light propagation paths 15' by using coiled optical fibers 15 of different lengths L1 to L4 or by using any other optical means already indicated above.

Therefore, according to one alternative embodiment of the present invention as for instance exemplified in figure 6, the testing range values L1 to L4 can be varied by switching between different light propagation sub-modules each comprising a certain optical fiber 15 of a certain different length, e.g., L1 and L2.

In a preferred embodiment of the invention's distance testing arrangement 5, optical or opto-mechanical switches 22' and 23' may be used in order to automatically and selectively switch between different light propagation sub-modules, but other alternatives are possible, including a physical intervention of an operator.

In a different embodiment of the invention, exemplified in figure 7, the light propagation module 7 may include a passive optical splitter 22 that is configured in order to split the incoming light 57 into fibers 15 with significantly different lengths L1, L2, L3 and L4.

After propagation through the different fibers 15 , the different light beams 57 combine again in the optical combiner 23 and then lead to the light sending module 8 and back to the LiDAR system 2.

Hence, a single emitted pulse of primary illumination light 57 originates four pulses that arrive at a different instance of time to the receiving unit for of the LiDAR system 2 or sensor, each corresponding to a different propagation length L1 to L4.

However, this requires additional processing features for the LiDAR system 2 or sensor in order to be able to detect multiple echoes from a single emitted pulse.

It should be noted that in Figure 7 the light propagating module 7 is composed of four different fibers 15, but different numbers of fibers 15 are possible using the appropriate optical splitters 22 and combiners 23.

In addition, the LiDAR system 2 must also be able to discriminate different copies of the same light signal sent, as a single optical pulse is split into several pulses that propagate through fibers with different lengths and thus arrive at the receiver at different times.

So far, it was assumed that the BPU 5 is kept in a fixed position, but it can also be mounted on a rotation goniometer, therefore enabling the BPU 5 to move in order to measure the range precision and trueness at different field of view angles.

In the proposed invention, light propagates 57 in spans of optical fibers 15 with well-defined lengths L1 to L4 in order to emulate or simulate free-space propagation.

However, special care must be taken as light propagates in optical fibers 15 at a different speed than in air due to the refractive index difference. In fact, a light pulse 57 takes more time to propagate in an optical fiber 15 than if it were propagating through the same length in free space. In order to account for the different propagation velocities, an equivalent propagation distance Leq can be defined, given by the following equation:

$$Leq = 2*Lc + Lcoll + nfiber/nair*Lfiber + Lsend, \qquad (1)$$

where Leq is the equivalent propagation distance (in air), Lc is the distance between the LiDAR system 2, sensor or camera and the BPU 5, Lfiber and nfiber are the length and effective refractive index of the fiber 15 in the light propagation module 7 and nair the refractive index of air (usually, it can be assumed that nair ≈ 1). Lcoll and Lsend are the effective propagation lengths in the light collection and sending modules 6 and 8, respectively, and take into account the propagation of light in the different optical media of such modules, including the entrance/exit windows, in-/out-coupling lenses and the optical fibers.

The reference range used to determine the trueness of a LiDAR system 2 is given by half of Leq, as it accounts for both sending and returning of the optical light beams. After a BPU 5 with a well-defined equivalent propagation distance is defined, this value can be used as the reference value for the trueness measurements, with the equivalent range value given by Leq/2 (Leq accounts for both the sending and returning propagation paths).

The range trueness and precision can be calculated by sending several optical signals from the LiDAR system 2 through the BPU 5, recording the measured range values, and statistically evaluate the trueness and precision as defined in ISO 5725.

The invention can be integrated in calibration and testing stations, automobile inspection centers, workshops and repair shops for either standalone LiDAR systems 2 or automotive integrated systems.

## Claims

1. Distance testing arrangement (5) for a LiDAR system (2),

   - wherein the LiDAR system (2) comprises a sender unit (3) configured to generate and emit primary light (57) to a field of view (50) and a receiver unit (4) configured to receive secondary light (58) from the field of view (50) and
   - wherein the distance testing arrangement (100) is configured

      - to receive and couple in primary light (57) emitted by the sender unit (3),
      - to subject received primary light (57) to propagation through a compactified, wound up and/or folded light propagation path (15') having (i) a predetermined propagation length (L1, L2, L3, L4) and (ii) in particular a reduced construction volume, thereby forming propagated light (57'), and
      - to couple out and send said propagated light (57') to the receiver unit (4).

2. Distance testing arrangement (5) according to claim 1, which:

   - is formed as a beam propagation unit (BPU),
   - comprises a light propagation module (7) having said compactified, wound up and/or folded light propagation path (15'),
   - comprises a light collection module (6) for the receiving from said sender unit (3) and coupling in said primary light (57) and preferably comprising at the sender unit's side a window (10), followed by a lens (11), an optical waveguide or fiber (12) and a connector or fiber connector (16) towards the light propagation module's side, and/or
   - comprises a light sending module (8) for the coupling out and sending to said receiver unit (4) said propagated light (57') and preferably comprising at the receiver unit's side a window (20), followed by a lens (19), an optical waveguide or fiber (18) and a connector or fiber connector (17) at the light propagation module's side.

3. Distance testing arrangement (5) according to any one of the preceding claims, wherein said compactified, wound up and/or folded light propagation path (15') is formed as or comprises an arrangement of one or plural optical waveguides, optical fibers (15), multiply reflecting mirror arrangements, plane-parallel plates and/or Fabry-Perot interferometric arrangements.

4. Distance testing arrangement (5) according to any one of the preceding claims, wherein said compactified light propagation path (15') is formed as one or a plurality of wound up optical fibers (15), wherein each optical fiber (15) offers a light propagation path (15') having a predetermined length (L1 - L4).

5. Distance testing arrangement (5) according to any one of the preceding claims, wherein switching means (25) is provided for controllably switching between distinct ones of the plurality of said compactified light propagation paths (15'), in particular formed by a corresponding plurality of wound up optical fibers (15).

6. Distance testing arrangement (5) according to claim 5, wherein said switching means (25) is or comprises one or plural optical light switches (22', 23') and/or optical beam splitters (22) and/or optical combiners (23).

7. Distance testing arrangement (5) according to claim 5, wherein range finding means (9) or a connection to range finding means (9) is provided, the range finding means (9) being configured in order to determine a distance (Lc, Lc1) between the light collection module (6) and the sender unit (3) and/or a distance (Lc, Lc2) between the light sending module (8) and the receiver unit (4).

8. Distance testing arrangement (5) according to any one of the preceding claims, formed as a test kit and/or as a retrofit package.

9. LiDAR system arrangement (100) comprising:

   - a LiDAR system (2) having a sender unit (3) configured to generate and emit primary light (57) to a field of view (50) and a receiver unit (4) configured to receive secondary light (58) from the field of view (50) and
   - a distance testing arrangement (5) according to any one of the preceding claims, which is optically coupled or capable of being optically coupled to the sender unit (3) and the receiver unit (4) of the LiDAR system (2).

10. Apparatus comprising an operation unit and a LiDAR system arrangement (100) according to claim 9 configured to monitor and/or control operation of the operation unit, wherein the apparatus is in particular formed as a vehicle.

Fig. 1

**Fig. 2A**

**Fig. 2B**

# Fig. 3

**Fig. 4**

Fig. 5

Fig. 6

Fig. 7

EP 3 825 725 A1

**Europäisches Patentamt**
**European Patent Office**
**Office européen des brevets**

# EUROPEAN SEARCH REPORT

Application Number

EP 19 21 0666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/250258 A1 (CRAWFORD JOHN [US] ET AL) 15 August 2019 (2019-08-15) | 1-6,8-10 | INV. G01S7/497 |
| A | * paragraphs [0014] - [0023], [0035], [0037] - [0039]; figures 1,2,5 * | 7 | ADD. G01S7/481 |
| X | US 4 627 723 A (FRENCH TIMOTHY O [GB] ET AL) 9 December 1986 (1986-12-09) | 1-6,8-10 | G01S17/931 |
| A | * column 3, line 54 - column 4, line 54; figure 3 * | 7 | |
| X | US 4 189 233 A (CROSS MICHAEL A [US] ET AL) 19 February 1980 (1980-02-19) | 1-4,7-10 | |
| A | * column 2, line 24 - column 4, line 8; figure 1 * | 5,6 | |

TECHNICAL FIELDS SEARCHED (IPC)

G01S

The present search report has been drawn up for all claims

| Place of search | Date of completion of the search | Examiner |
|---|---|---|
| Munich | 27 April 2020 | Reeck, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 21 0666

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2020

| Patent document cited in search report | | | Publication date | Patent family member(s) | | | Publication date |
|---|---|---|---|---|---|---|---|
| US 2019250258 | A1 | | 15-08-2019 | US | 2019250258 | A1 | 15-08-2019 |
| | | | | WO | 2019160582 | A1 | 22-08-2019 |
| US 4627723 | A | | 09-12-1986 | DE | 3418298 | A1 | 13-12-1984 |
| | | | | FR | 2546307 | A1 | 23-11-1984 |
| | | | | GB | 2141891 | A | 03-01-1985 |
| | | | | IN | 160789 | B | 08-08-1987 |
| | | | | IT | 1179671 | B | 16-09-1987 |
| | | | | NL | 8401482 | A | 17-12-1984 |
| | | | | SE | 459127 | B | 05-06-1989 |
| | | | | US | 4627723 | A | 09-12-1986 |
| | | | | YU | 86684 | A | 31-10-1986 |
| US 4189233 | A | | 19-02-1980 | BE | 864643 | A | 07-09-1978 |
| | | | | CA | 1109142 | A | 15-09-1981 |
| | | | | US | 4189233 | A | 19-02-1980 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PIERROTTET, D. et al.** Characterization of 3-D imaging LiDAR for hazard avoidance and autonomous landing on the Moon. *Laser Radar Technology and Applications XII. Vol. 6550. International Society for Optics and Photonics,* 2007, vol. 6550